# EUROPEAN PATENT APPLICATION

(11) **EP 1 109 092 A1**
(43) Date of publication of application: **20.06.2001**
(21) Application number: 99124953.3
(22) Date of filing: 14.12.1999
(51) Int. Cl.: G06F 3/033

(54) **File system navigation**

(71) Applicant: SUN MICROSYSTEMS, INC., Palo Alto, California 94303 (US)
(72) Inventor: Bauer, Mathias, 22559 Hamburg (DE); Taxhet,Stefan, 22391 Hamburg (DE); Höger, Lutz, 20253 Hamburg (DE); Burow, Hans-Peter, 22111 Hamburg (DE)
(74) Representative: Betten & Resch

(57) **Abstract**

For entering a new file directory on a computer a single file navigation dialogue window (20) is displayed including a user selectable list of predetermined default directories (20-1), user defined directories (20-2) and previously used directories (20-3). The user can then easily select the desired directory.

## Description

### FIELD OF THE INVENTION

The present invention relates to the file navigation inside a computing environment. The present invention relates in particular to a method of entering a new directory in the computing environment.

### DESCRIPTION OF THE RELATED ART

The navigation inside a complex file system of a computer has been an important element of operating system and application software development since the introduction of the computer. The possibility of changing directories and work documents easily and quickly is a requirement for a software user in particular in a computing environment including a large number of different types of documents like business correspondence, graphics and so forth.

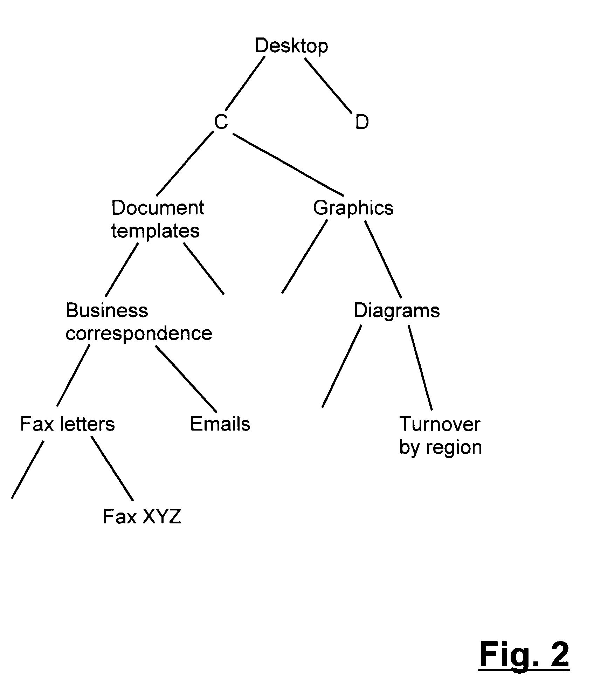

With computers employing a graphical user interface, a so called "file open" dialogue window has become into use which allows the user to move upwards and downwards along a path of a directory tree of the computer. An exemplary directory tree is shown in Figure 2. The computer system in this example has two drives, called C and D (of which only the former is shown in detail). A large number of directories and subdirectories are arranged hierarchically in the form of a tree. On the lowest level of the directory tree the documents are located, in the example of Figure 2 "Fax XYZ" and "turnover by regions". If the user working on the document "Fax XYZ", for example, wishes to change to another document, i.e. the diagram "turnover by regions", he has to "click himself up" the directory tree until he reaches the drive C and then select directories until he reaches the document "turnover by regions" which he or she may subsequently enter by a mouse click or the like. This way of changing from one working document to another is apparently complicated and time consuming and furthermore requires at least some implicit knowledge about where to find a desired document. A similar procedure is necessary if the user wishes to save the document in a particular directory.

Another possibility to enter a desired particular document is to type in the name of the document directly and let the computer search the same in the computer system. Typing in the file name, however, may be awkward in the case of long names. Moreover, the user needs to know the exact spelling of the document name.

Another possibility is to have special lists of documents like a history list showing the last used four or five documents or a favorites list, which is accessible for example by a separate "start" key.

It is therefore an object of the present invention to improve the file navigation inside a computing environment and enable the user to easily change from one directory to a desired other directory.

### SUMMARY OF THE INVENTION

The present invention provides a method of entering a new directory on a computer comprising the steps of generating a signal for displaying a file navigation dialogue window including a user selectable list of predefined default directories, user defined directories and of previously used directories, receiving a user selection signal, and entering a selected directory.

The file navigation dialogue window according to the present invention allows the user to easily and quickly find a desired directory in the computer system. The user may select from defined default directories including, for example, the most frequently used document templates, user defined directories in which the user may include the documents he or she prefers, and a history list of latest used documents. In the list of user defined directories the user may add new directories or files, edit or remove directories or files. The user may also, using a so called "drag and drop" operation change the display order of the directories in the list of user defined directories.

The file navigation window preferably is context - independent, that is the style and content of the window is displayed in the same manner irrespective of the document or environment the user is currently working on.

The list of previously used directories contains a number of latest used documents during the present computer or network session. Alternatively the list of previously used directories may also include directories of earlier sessions.

The list of user defined directories may be a shared user directory list, which is accessible for a plurality of users. This feature is particularly useful for the application in larger entities like companies having a large number of computer work places. Preferably the selectable documents are displayed upon entering a desired directory.

A further implementation of the present invention provides a software tool for entering a new directory on a computer providing instructions for displaying a file navigation dialogue window comprising a user selectable list of predetermined default directories, user defined directories and previously used directories, receiving a directory selection signal from a user, and entering the selected directory.

A still further implementation of the present invention provides a computer program for entering a new file directory on a computer comprising program code adapted for displaying a file navigation dialogue window with a user selectable list of predefined default directories, user defined directories and previously used directories, receiving a directory selection signal from a user, and entering the selected directory.

A program code may be embodied in any form of a computer program product. A computer program product comprises a medium configured to store or transport computer readable code, or in which computer readable code may be embedded. Some example of computer program products are CD-ROM disks, ROM-cards, floppy-disks, magnetic tapes, computer hard drives, service on a network and signals transmitted over a network representing computer readable code.

A further implementation of the present invention provides an apparatus for entering a new file directory, comprising a unit for generating a display signal for displaying a file navigation dialogue window comprising a user selectable list of predetermined default directories, user defined directories and previously used directories, a unit for receiving a directory/document selection signal, and a unit for entering the selected directory.

The great advantage and utility of the present invention is that the file navigation inside a computing environment which may be a single personal computer or work station or a computer network is greatly improved and facilitated for the user. In one single dialogue window the user can select among a large number of directories including predetermined default directories, user defined directories and previously used directories. The directories and documents available through this dialogue window can thus be adapted by the user according to his or her own needs. In practice most of the documents a user wishes to enter can so be retrieved easily using only one dialogue window.

The above mentioned and other features, utilities and advantages of the present invention will be apparent from the following detailed description of preferred embodiments of the invention as illustrated in the accompanying drawings.

### BRIEF DESCRIPTION OF THE DRAWINGS

Figure 1 is a flow chart illustrating method steps of a preferred embodiment of the present invention.

Figure 2 illustrates an example of a directory tree in a computer system.

Figure 3 illustrates an example of a screen display according to a preferred embodiment of the present invention.

Figure 4 illustrates a further example of a screen display according to a preferred embodiment of the present invention.

Figure 5 illustrates a still further example of a screen display according to a preferred embodiment of the present invention.

Figure 6 illustrates a still further example of a screen display according to a preferred embodiment of the present invention.

Figure 7 illustrates a computer system to which the present invention may be applied.

Figure 8 illustrates a client server configuration, to which the present invention may also be applied.

### DETAILED DESCRIPTION OF PREFERRED EMBODIMENTS

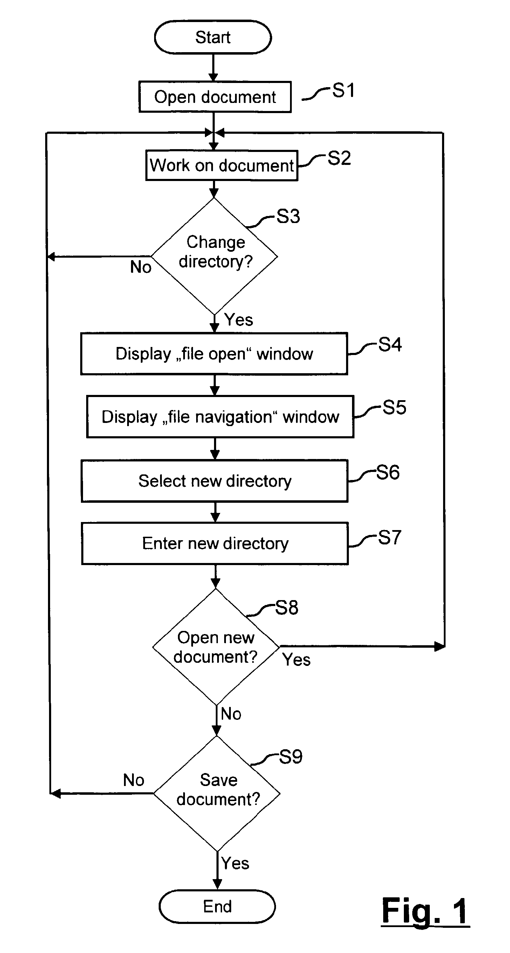

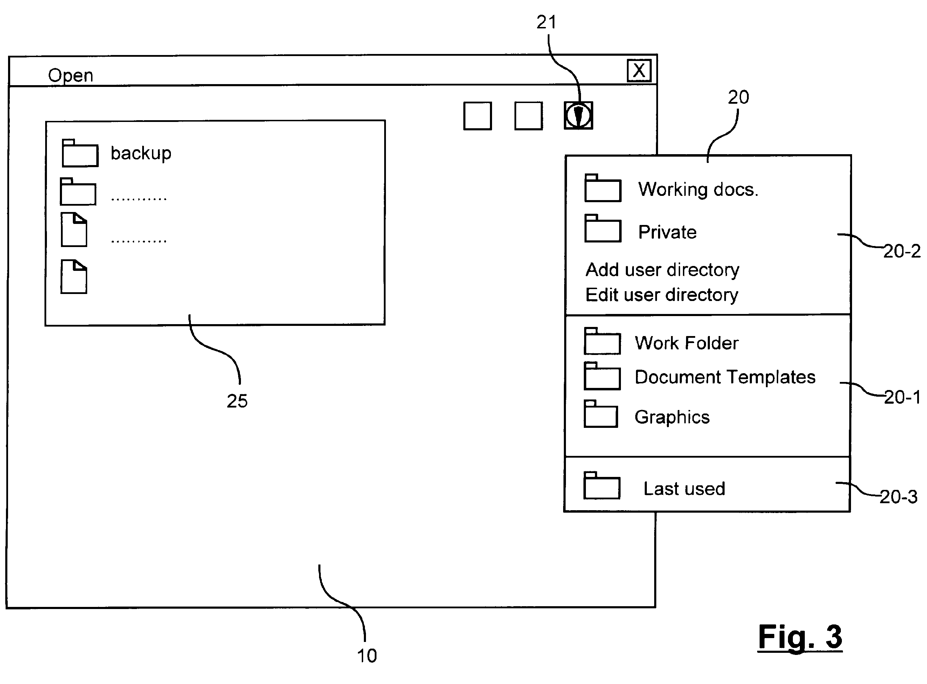

Figure 1 is a flow chart illustrating method steps of a preferred embodiment of the present invention. After opening an arbitrary document like a text document, an HTML-document and so forth on a computer in step S1 the user can work on the document in step S2. If he or she wishes to enter another document, for example a graphics document in order to edit a diagram a "file open" window opens upon operation of a key field on a display, a typed short key or the like. An example of a "file open" window (10) is illustrated in Figure 3. The user may then click on the "file navigation" key (or use a corresponding short key) to open the file navigation dialogue window 20. This file navigation window consists of three sections. The first section 20-1 displays a list of predetermined default directories, the second section 20-2 a list of user defined directories and the third section 20-3 a directory of latest used directories.

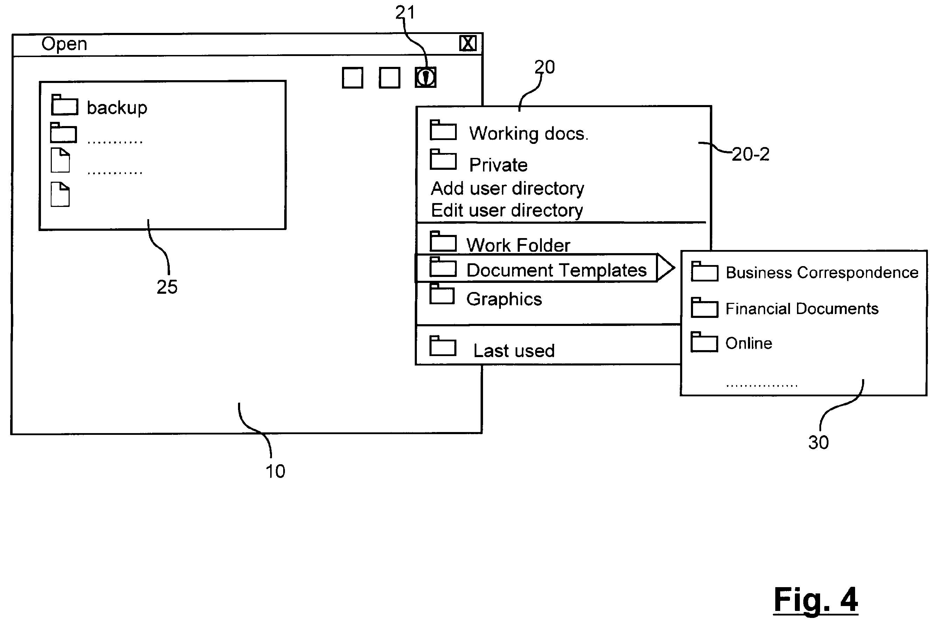

The predetermined default directory typically contains document templates or for example typical business correspondence documents. The list of default directories preferably contain those predefined documents which are either frequently used by a typical user or difficult to find in the directory tree or both. Figure 4 shows an example of a document list 30 displayed when the item "document templates" in section 20-1 of the file navigation window is entered by a mouse click or the like. The list may contain, as is shown in Figure 4 business correspondence documents, financial documents, online documents and so forth.

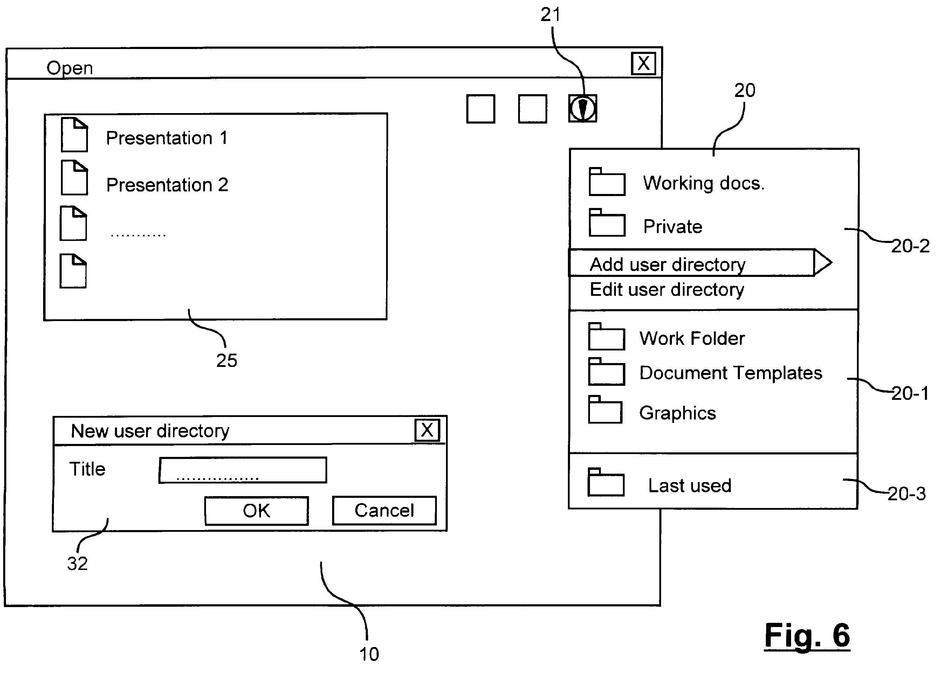

The directories and documents contained in the list 20-2 of user defined directories can be defined by the user. Besides the directories, in the example of Figure 3 "Working documents" and "Private", there are therefore the additional items "Add user directory" and "Edit user directory". If the user selects the item "Add user directory" a new dialogue window 32 opens, as is shown in Figure 6. The user may then enter the title of the directory and the program searches the directory and adds the same to the list 20-2 of user selectable directories. In the same way a directory which the user no longer needs may of course also be removed from the list. With the item "Edit user directory" it is possible to edit a user directory, that is to add new documents into a directory or to remove documents. It is furthermore possible to change the order of objects or documents within a directory using a so called "drag and drop" process carried out on a display window 25. The user may for example exchange the order of the two documents "presentation 1" and "presentation 2" displayed in window 25 in Figure 6.

The list 20-2 of user defined directories may also be a shared user directory accessible for plurality of users, for example a group of people working on a common project so that the updated documents of the project are easily accessible for all the persons working on the project.

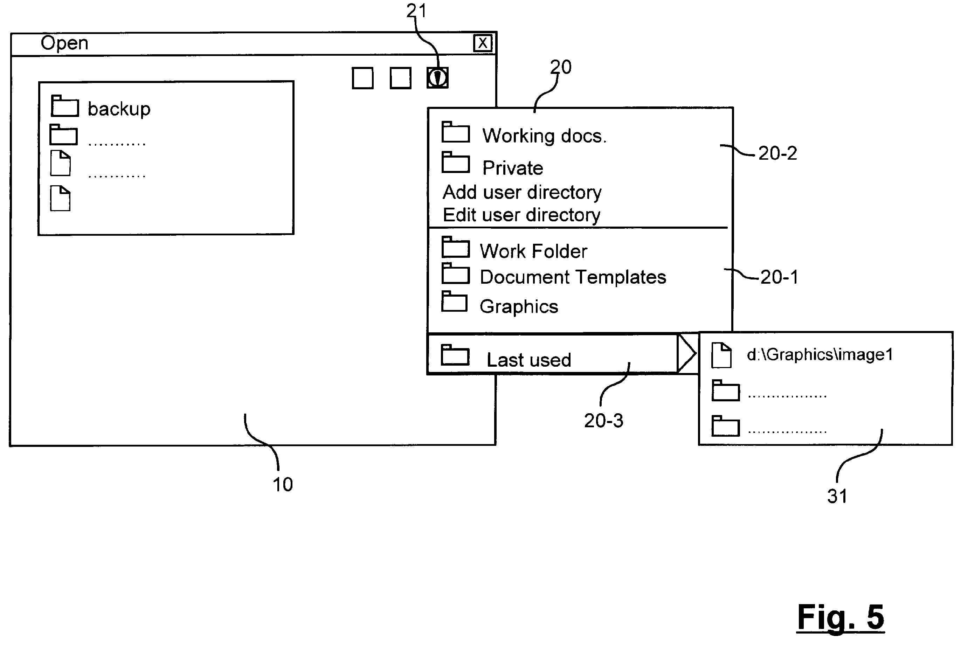

The third section 20-3 of the file navigation window is a directory of previously used directories, for example a number of last used directories of the present computer or network session. Alternatively, however, the list may also contain directories of previous sessions. Like the other sections 20-1 and 20-2 the list 20-3 of the latest used directories can also easily be opened by moving the mouse to the respective item and continuing to push the mouse button. Then the window 31 (shown in Figure 5) opens displaying the latest used directories. The user can thus easily select a new directory and enter the same (steps S6 and S7 in Figure 1). The user may then open a new document within the selected directory (step S8) or save the current document in the selected directory (step S9).

Since the list 20-2 of user defined directories and documents contained therein can be determined by the user and is available for user selection "on one click" the file navigation capabilities are very flexible and can be adapted to the user's present needs. With the default directories important document templates and the like are also always only one mouse click away as well as a number of lately opened documents. Therefore the file navigation is greatly improved for the user. Furthermore the file navigation window is context independent, that is it looks the same way and contains the same directories and documents irrespective of the document the user is currently working on. The user can so always find the desired document quickly and easily in the file navigation window which always looks identical.

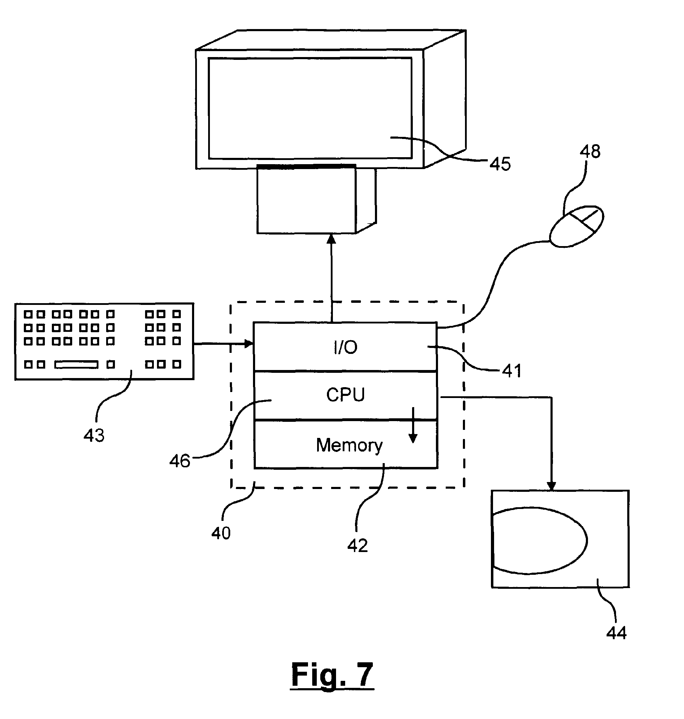

The present invention is applicable to a hardware configuration like a personal computer or work station as illustrated schematically in Fig. 7. The computer may comprise a central processing unit CPU 46, an input output I/O unit 41, an internal memory 42 and an external memory 44. The computer further comprises standard input devices like a keyboard 43, a mouse 48 or speech processing means (not illustrated).

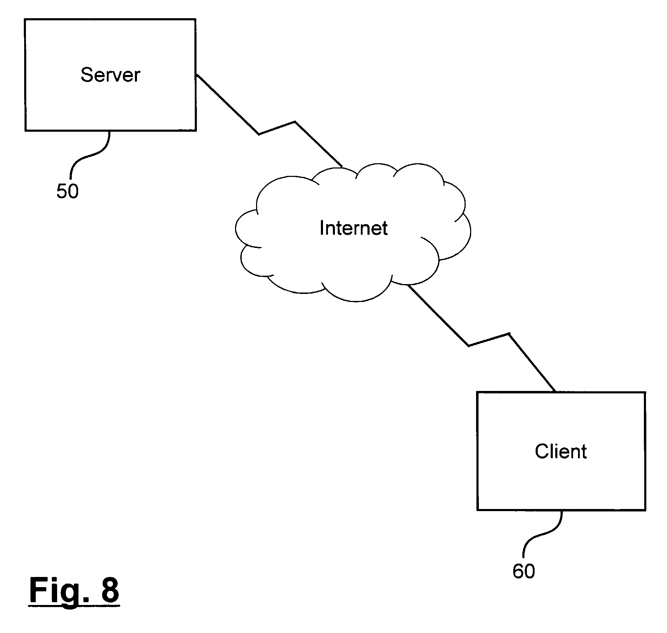

The invention, however, may also be applied to a client server configuration as illustrated in Fig. 8. The file navigation window may be displayed on a display screen of client device 60 while some or all steps of the method as illustrated before are carried out on a server computer 50 accessible by the client device 60 over a data network as the Internet using a browser application or the like.

While the invention has been particularly shown with reference to a preferred embodiment thereof, it will be understood by those skilled in the art that various other changes in the form and details may be made therein without departing from the spirit and scope of the invention.

## Claims

1. A method of entering a new file directory on a computer comprising the steps of:
generating a signal for displaying a file navigation dialogue window (20) including a user selectable list of predefined default directories (20-1), user defined directories (20-2) and of previously used directories (20-3)
receiving a user selection signal, and
entering the selected directory.

2. The method of claim 1, wherein user defined directories and files within these directories can be added, edited and removed using the file navigation window (20).

3. The method of claim 1, further comprising generating a signal for displaying a list of selectable documents.

4. The method of claim 1, wherein the default directories contain document templates.

5. The method of claim 1, wherein style and content of the file navigation window (20) is independent of the current document context.

6. The method of claim 1, wherein the list of previously used directories contains the latest used directories of the present computer or network session.

7. The method of claim 1, wherein the list of user defined directories is a list of shared user directories accessible for a plurality of users.

8. A software tool for entering a new file directory on a computer providing instructions for
displaying a file navigation dialogue window (20) comprising a user selectable list of predetermined default directories (20-1), user defined directories (20-2) and previously used directories (20-3),
receiving a directory selection signal from a user, and
entering the selected directory.

9. The software tool of claim 8, wherein user defined directories and files within these directories can be added, edited and removed using the file navigation window (20).

10. The software tool of claim 8, wherein the display order of the user defined directories can be changed using the file navigation window (20).

11. The software tool of claim 8, wherein the default directories contain document templates.

12. The software tool of claim 8, wherein style and content of the file navigation window is independent of the current document context.

13. The software tool of claim 8, wherein the list of previously used directories contains the latest used directories of the present computer or network session.

14. The software tool of claim 8, wherein the list of user defined directories is a list of shared user directories accessible for a plurality of users.

15. A computer program for entering a new file directory comprising program code adapted for:
displaying a file navigation dialogue window with a user selectable list of predefined default directories, user defined directories and previously used directories, receiving a directory selection signal from a user, and
entering the selected directory.

16. The computer program of claim 15, wherein user defined directories and files within these directories can be added, edited and removed using the file navigation window.

17. The computer program of claim 15, wherein the display order of the user defined directories can be changed using the file navigation window (20).

18. The computer program of claim 15, wherein the default directories contain document templates.

19. The computer program of claim 15, wherein style and content of the file navigation window is independent of the current document context.

20. The computer program of claim 15, wherein the list of previously used directories contains the latest used directories of the present computer or network session.

21. The computer program of claim 15, wherein the list of user defined directories is a list of shared user directories accessible for a plurality of users.

22. A computer program product for entering a new file directory having program code adapted for:
displaying a file navigation dialogue window (20) comprising a user selectable list of predetermined default directories (20-1), user defined directories (20-2) and previously used directories (20-3),
receiving a directory selection signal from a user, and
entering the selected directory.

23. An apparatus for entering a new file directory, comprising:
a unit (41, 46) for generating a display signal for displaying a file navigation dialogue window (20) comprising a user selectable list of predetermined default directories (20-1), user defined directories (20-2) and previously used directories (20-3),
a unit (41, 46) for receiving a directory selection signal, and
a unit (46, 42) for entering the selected directory.
